# EUROPEAN PATENT SPECIFICATION

(11) **EP 1 647 790 B1**
(45) Date of publication and mention of the grant of the patent: **20.08.2008**
(21) Application number: 05710128.9
(22) Date of filing: 10.02.2005
(51) Int. Cl.: F27D 3/12, C04B 35/64, F01N 3/02, F27D 5/00

(54) **METHOD OF MANUFACTURING POROUS CERAMIC BODY**
VERFAHREN ZUR HERSTELLUNG VON PORÖSEN KERAMISCHEN KÖRPERN
MÉTHODE DE FABRICATION DE CORPS EN CÉRAMIQUE POREUSE

(30) Priority: 01.07.2004 JP 2004196047; 01.02.2005 WO PCT/JP2005/001423
(43) Date of publication of application: 19.04.2006
(73) Proprietor: IBIDEN CO., LTD., Ogaki-shi, Gifu 503-8604 (JP)
(72) Inventor: SAIJO, Takamitsu, c/o IBIDEN Co., Ltd.,, Ibi-gun, Gifu 5010695 (JP); HIGUCHI, Koji, c/o IBIDEN Co., Ltd.,, Ibi-gun, Gifu 5010695 (JP)
(74) Representative: Besnard, Christophe Laurent
(86) International application number: PCT/JP2005/002076
(87) International publication number: WO 2006/003736

(56) References cited:
- EP-A- 1 184 637
- JP-A- 6 265 276
- JP-A- 11 079 853
- JP-A- 2002 226 271
- JP-A- 2003 294 374
- JP-U- 5 042 998
- US-A1- 2002 042 037
- PATENT ABSTRACTS OF JAPAN vol. 2003, no. 12, 5 December 2003 (2003-12-05) -& JP 2003 294374 A (NORITAKE CO LTD), 15 October 2003 (2003-10-15)
- PATENT ABSTRACTS OF JAPAN vol. 1999, no. 08, 30 June 1999 (1999-06-30) -& JP 11 079853 A (TOSOH CORP), 23 March 1999 (1999-03-23)

## Description

### TECHNICAL FIELD

This application claims benefit of priority to Japanese Patent Application No. 2004-196047, filed on July 1, 2004, as well as to International Patent Application PCT/JP2005/001423, filed on February 1, 2005.
The present invention relates to a jig for firing ceramics that is used for manufacturing a ceramic formed body and a manufacturing method for a porous ceramic member in which such a jig for firing ceramics is used.

### BACKGROUND OF THE INVENTION

In recent years, particulates contained in exhaust gases that are discharged from internal combustion engines of vehicles, such as a bus, a truck and the like, construction machines and the like, have raised serious problems since those particulates are harmful to the environment and the human body. Various ceramic filters made from porous ceramics, which purify exhaust gases by allowing exhaust gases to pass through the porous ceramics so as to collect particulates in the exhaust gases, have been proposed.

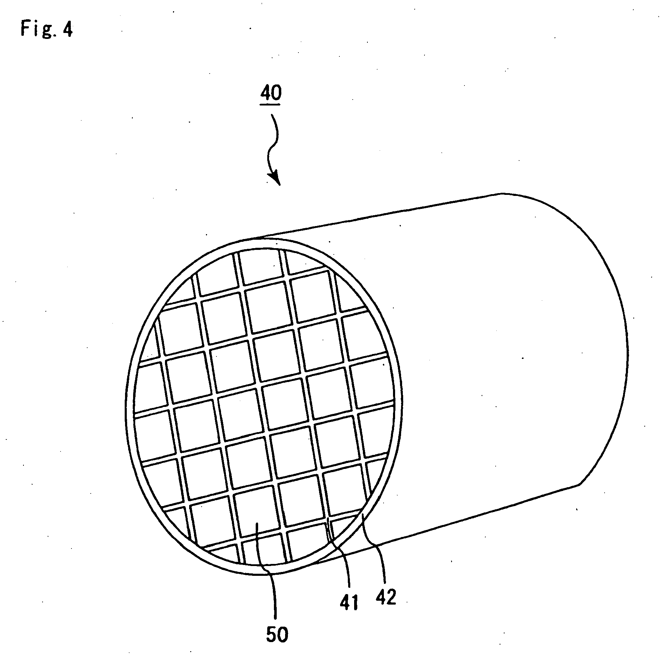

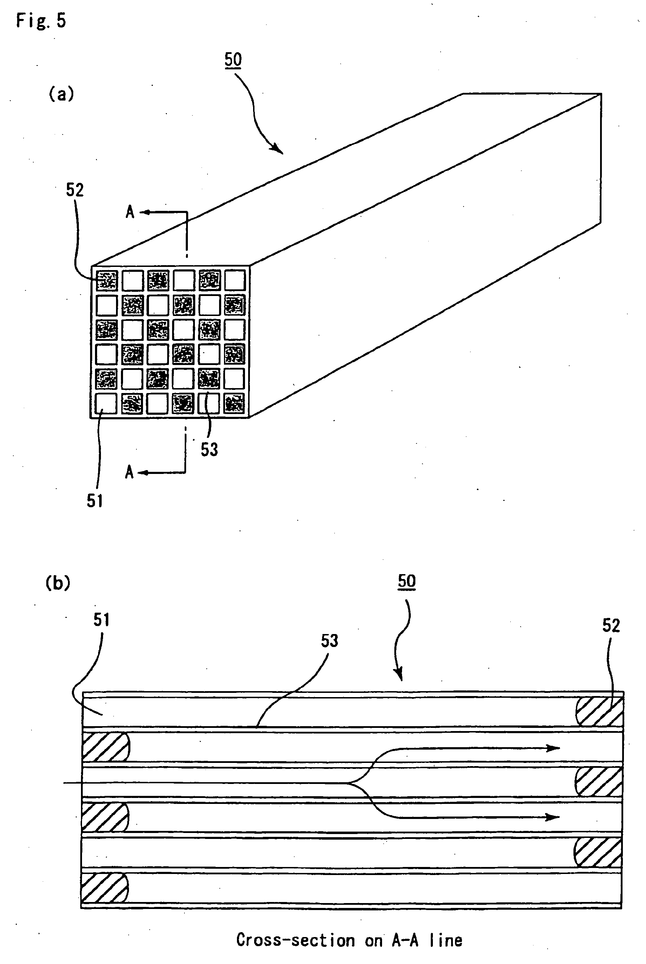

Normally, the ceramic filter has a structure in which a plurality of porous silicon carbide sintered bodies 50 serving as the porous ceramic bodies as shown in Fig. 4 are combined with one another through sealing material layer 41 with a sealing material layer 42 being formed on the periphery thereof. Here, each of the porous silicon carbide sintered bodies 50 has a structure in which, as shown in Fig. 5, a number of through holes 51 are placed in parallel one another in the length direction with a partition wall 53 that separates the through holes 51 functioning as a filter.

In other words, as shown in Fig. 5(b), each of the through holes 51 that are formed in the porous silicon carbide sintered body 50 is sealed with a plug 52 at either one of ends on its exhaust-gas inlet side or outlet side so that exhaust gases that have entered one through hole 51 are discharged from another through hole 51 after having always passed through each partition wall 53 that separates the through holes 51; thus, when the exhaust gases pass through the partition wall 53, particulates are captured by the partition wall 53 so that the exhaust gases are purified.
Since the porous ceramic member 50 of this type has superior heat resistance and provides easy regenerating processes and the like, it has been applied to various large-size vehicles and vehicles with diesel engines.

Conventionally, upon manufacturing the porous silicon carbide sinteredbody of this type, first, silicon carbide powder, a binder and a dispersant solution are mixed with one another to prepare a mixed composition for manufacturing a formed body, and this mixed composition is subj ected to an extrusion-forming process and the like to manufacture a silicon carbide formed body.

Next, the resulting silicon carbide formed body is dried by using a heater or the like to manufacture a dried body of a silicon carbide formed body that has predetermined strength, and can be easily handled.

After this drying process, the silicon carbide formed body is heated at 400 to 650°C in an oxygen-containing atmosphere so that the solvent in the organic binder component is volatalized and degreasing processes to decompose and eliminate the resin component are carried out, and the resulting formed body is further subjected to a firing process in which silicon carbide powder is heated at 2000 to 2200°C in an inert gas atmosphere to be sintered; thus, a porous silicon carbide sintered body is manufactured.

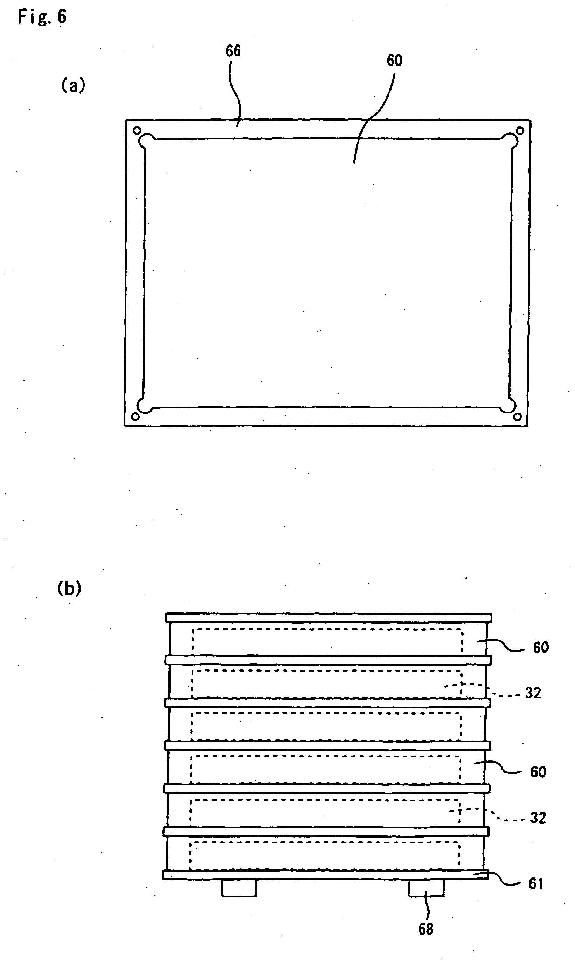

Fig. 6(a) is a plan view that schematically shows a jig for firing to be used in a conventional firing process for a silicon carbide formed body, and Fig. 6 (b) is a front view that shows a state in which the jigs for firing are piled up in multiple stages and fired.
In the conventional firing process for a silicon carbide formed body, first, a plurality of silicon carbide formed bodies 32 that have been degreased are placed in a box-shaped jig for firing 60 with an opened upper face, as shown in Fig. 6, and a plurality of the jigs for firing 60 having silicon carbide formed bodies 52 placed therein are piled up to form a piled-up body. After this piled-up body has been placed on a supporting base 61, the supporting base 61 is transported onto a shifting base 68 such as a conveyer belt, and the silicon carbide formed body 32 is heated and fired by a heater so that a porous silicon carbide sintered body is manufactured.

In the conventional firing process for a silicon carbide formed body of this type, the heating process is carried out in a piled-up state in which the jigs for firing having silicon carbide formed bodies placed thereon are piled up in multiple stages; thus the atmospheres inside the jigs for firing are completely isolated by the respective jigs for firing; consequently, dispersions tend to occur in the firing states of the respective silicon carbide formed bodies depending on the jigs for firing in which silicon carbide formed bodies are placed and portions inside the jigs for firing.

In other words, the porous silicon carbide sintered bodies, manufactured in this method, tend to have dispersions in the pore diameter depending on the respective porous silicon carbide sintered bodies, and also have dispersions in strength, and when a ceramic filter is manufactured by using the porous silicon carbide sintered body of this type, dispersions tend to occur in the strength and pore diameter therein. Moreover, cracks tend to occur in the sintered body.

The applicant of the present application has found that dispersions in the firing state of the silicon carbide formed body are caused by SiO and Si generated by oxygen contained in the formed body that has been degreased, and in order to eliminate these, have already proposed a manufacturing method for a porous silicon carbide sintered body in which the remaining amount of carbon in the formed body is adjusted and in which carbon powder and/or carbon particles are/is spread all over the bottom face of a jig for firing (for example, see Patent Document 1).

Patent Document 1: Japanese Patent Application Laid-Open No. 2002-226271

### DISCLOSURE OF THE INVENTION

### PROBLEMS TO BE SOLVED BY THE INVENTION

Although occurrence of: dispersions in the strength and pore diameter; and cracks and the like can be prevented by using the method described in Patent Document 1 to a certain extent, the effects are not sufficient and occurrence of dispersions in the pore diameter and the like depending on places have to be further prevented.
Moreover, in the respective porous ceramic members made from ceramic materials such as ni tride ceramics, carbide ceramics other than silicon carbide, oxide ceramics and the like dispersions in the firing state of the formed body tend to occur depending on the jigs for firing and places of the jigs for firing to cause subsequent dispersions in the pore diameter to the respective sintered bodies, and dispersions also occur in the strength; consequently, when a ceramic filter is manufactured by using the sintered body of this type, dispersions occur in the strength and pore diameter thereof, and it becomes necessary to prevent these dispersions.

The present invention has been devised to solve these problems, and its obj ective is to provide a jig for firing ceramics by which a ceramic formed body is uniformly fired even when used in a piled-up state with multiple stages, and a manufacturing method for a porous ceramic body in which this jig for firing ceramics is used.

### MEANS TO SOLVE THE PROBLEMS

[0015]

[0016]

[0017]

A manufacturing method for a porous ceramic body according to the present invention is a manufacturing method for a porous ceramic body as defined in claim 1.

Variants of a manufacturing method for a porous ceramic body according to the present invention, are defined in dependent claims 2 and 3.

### EFFECTS OF THE INVENTION

According to the jig for firing ceramics of the present invention, a through hole and/or a cut-out portion are/is formed on a portion thereof; therefore, even in the case where, upon firing a ceramic formed body by using the jig for firing ceramics, the jigs for firing ceramics, which are piled up in multiple stages, are used, an ambient atmospheric gas is allowed to flow inside the jigs for firing ceramics piled up in multiple stages so that the ambient temperature on the periphery of the ceramic formed body is equalized, and component concentrations in the ambient atmospheric gas are also equalized. In particular, in the case where, upon manufacturing a silicon carbide sintered body, this jig for firing ceramics is used, an ambient atmospheric gas is allowed to flow inside the jigs for firing ceramics piled up in multiple stages so that the ambient atmosphere on the periphery of the ceramic formed body is equalized, and concentrations of components, such as SiC, SiO, Si and the like, in the ambient atmosphere are also equalized. Consequently, a number of ceramic formed bodies are sintered under uniform conditions so that it becomes possible to obtain ceramic filters that exert uniform characteristics when used as filters.

Moreover, according to the manufacturing method for a porous ceramic body of the present invention, since the jig for firing ceramics in which a through hole and/or a cut-out portion are/is formed at a portion thereof is used so as to carry out a firing process on a ceramic junction, a plurality of ceramic formed bodies can be fired under uniform conditions so that it becomes possible to obtain a porous ceramic body that exert uniform characteristics when used as filters.

### BEST MODE FOR CARRYING OUT THE INVENTION

The following description will first discuss a jig for firing ceramics according to the present invention.
The jig for firing ceramics of the present invention is the jig for firing ceramics, which is used by being piled up in multiple stages upon firing a ceramic formed body, having a through hole and/or a cut-out portion formed in a portion thereof.
In other words, either of a through hole or a cut-out portion, or both of these are formed at a portion of the jig for firing ceramics of the present invention.
Referring to figures, the following description will respectively discuss a jig for firing ceramics in which only the through hole is formed, a jig for firing ceramics in which only the cut-out portion is formed and a jig for firing ceramics in which both of the through hole and the cut-out portion are formed.

Referring to figures, the jig for firing ceramics of the present invention will be explained.
Fig. 1(a) is a plan view that schematically shows one example of a jig for firing ceramics of the present invention, and Fig. 1(b) is a cross-sectional view taken along line A-A of the jig for firing ceramics shown in Fig. 1(a).
Fig. 2-1 (a) is a plan view that shows another example of the jig for firing ceramics of the present invention, and Fig. 2-1(b) is a cross-sectional view taken along line A-A of the jig for firing ceramics shown in Fig. 2-1(a).

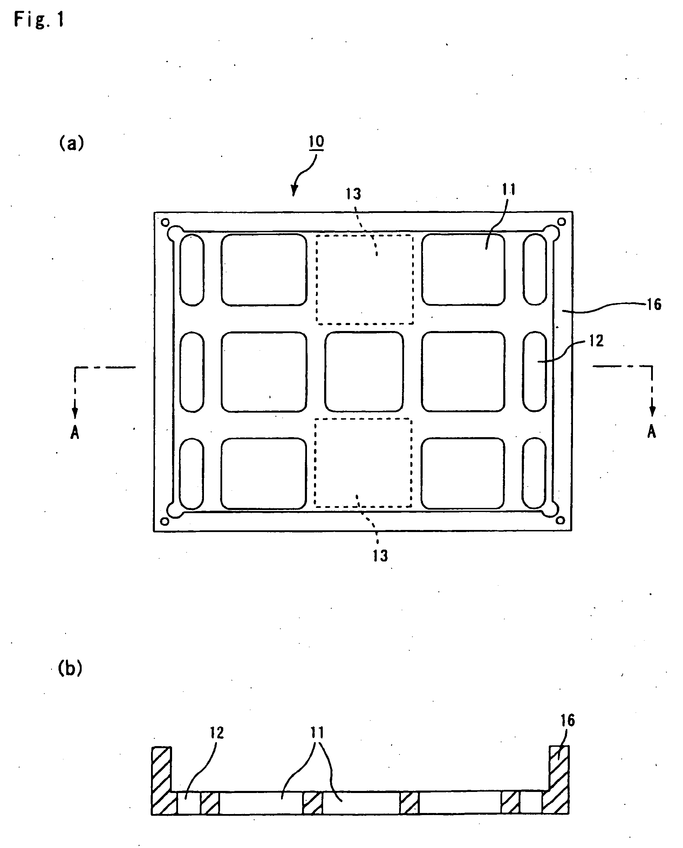

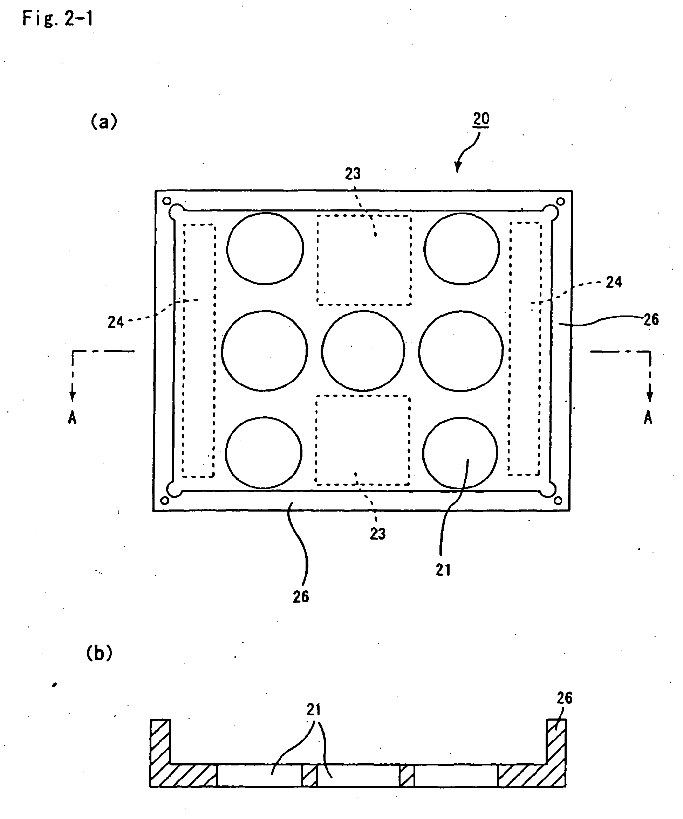

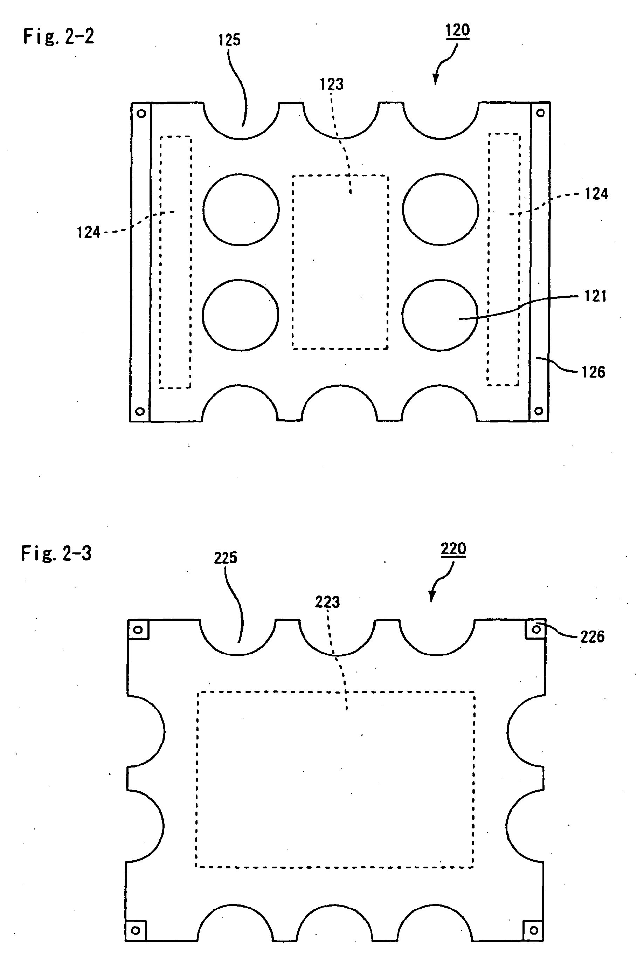

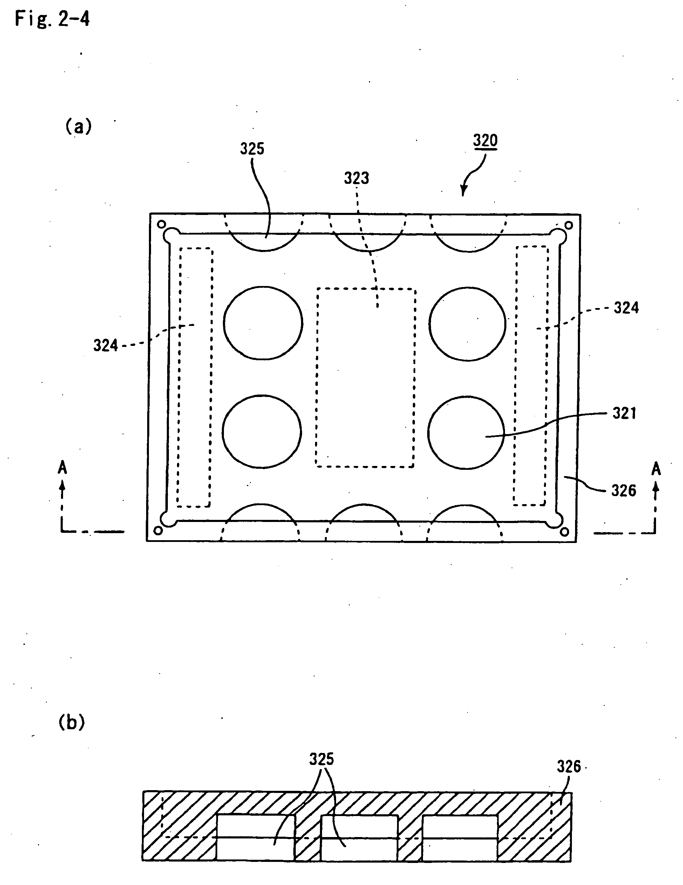

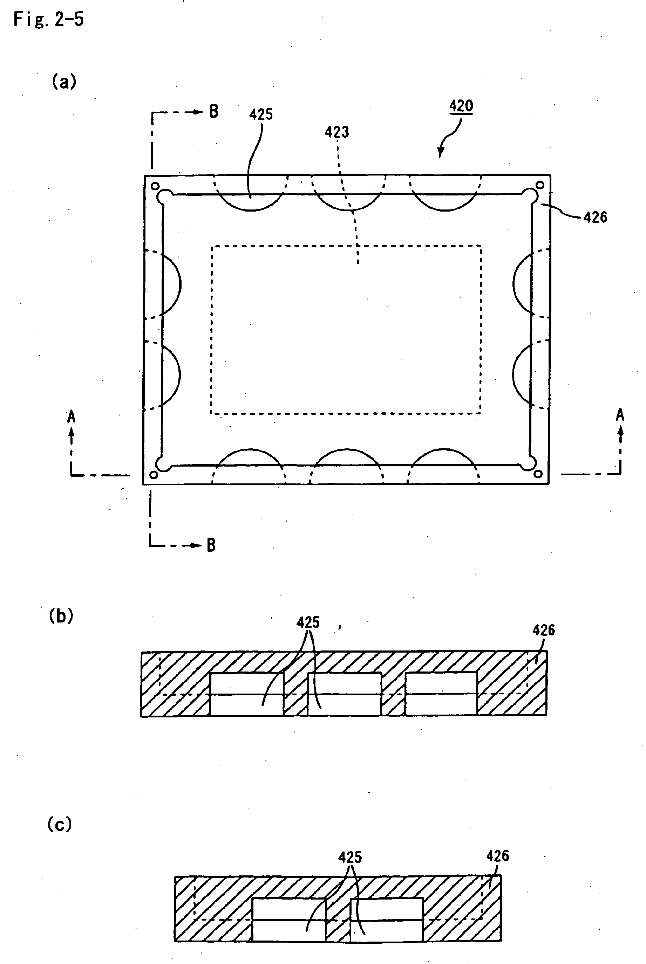

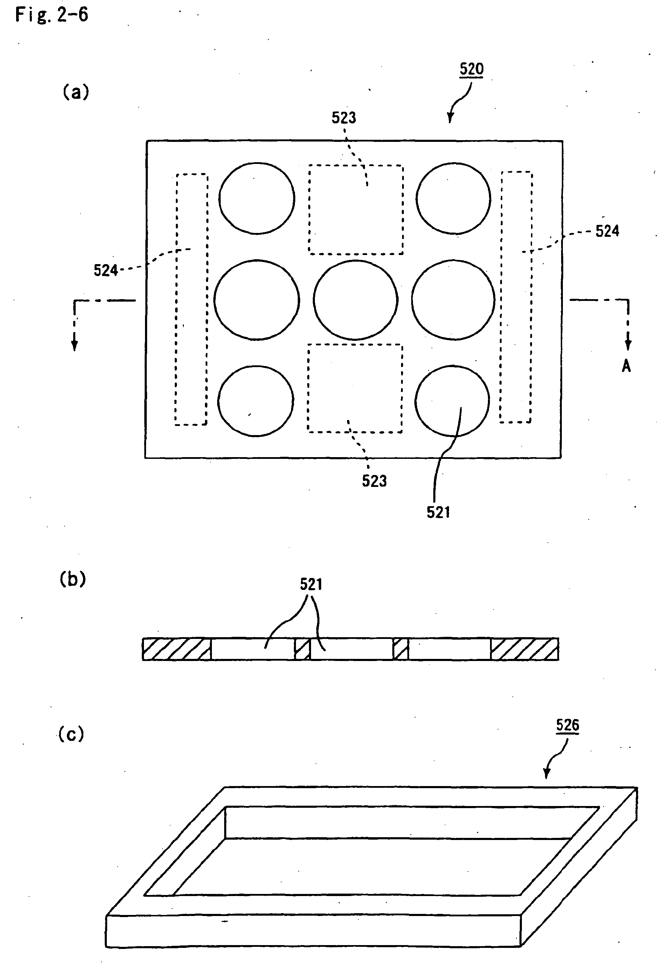

Figs. 1 and 2-1 respectively show jig for firing ceramics in which only the through hole is formed.

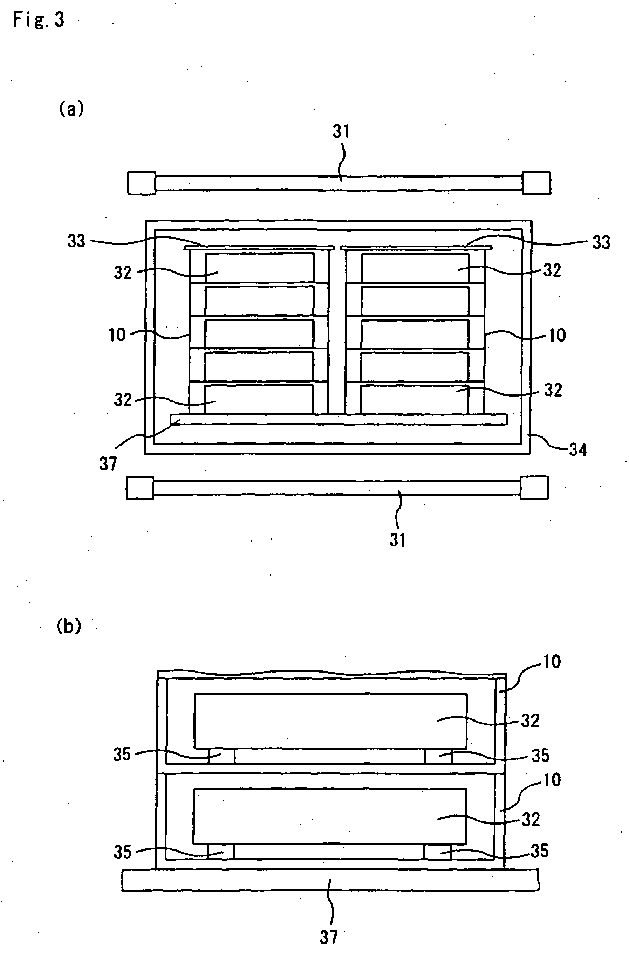

The jig for firing ceramics 10 shown in Figs. 1(a) and 1(b) have a box-shape with the upper face being open, and a plurality of through holes 11 and 12 are formed in the bottom face.
In this manner, since the plurality of through holes 11 and 12 are formed, a convection easily takes place inside each jig for firing ceramics 10 even when the jigs for firing ceramics are piled up in multiple stages and used, and an ambient atmospheric gas is allowed to flow inside the jigs for firing ceramics 10 that are piled up; thus, the ambient temperature on the periphery of each of ceramic formed bodies placed inside each of the jig for firing ceramics 10 is virtually equalized independent of positions of the respective jig for firing ceramics and positions at which they are placed inside each jig for firing ceramics, and the component concentrations (for example, component concentrations, such as SiC, SiO, Si and the like, in a silicon carbide formed body) in the ambient atmospheric gas on the periphery of each of ceramic formed bodies are also equalized so that each of the ceramic formed bodies can be fired under uniform conditions. Here, in general, upon piling up the jig for firing ceramics 10, a plate-shaped lid 33 (see Fig. 3) is placed on the uppermost jig for firing ceramics 10 so that dusts and the like are prevented from entering the inside of each jig for firing ceramics 10. Thus, the entire structure of the piled-up jig for firing ceramics is formed into a closed space so that the ambient atmosphere of the entire piled-up jig for firing ceramics can be equalized.
Here, in the jig for firing ceramics 10, the wall portion 16 of a side face is allowed to function as a base-supporting portion upon piling up the jig for firing ceramics in multiple stages.

With respect to the shape in the plan view of each through hole formed in the jig for firing ceramics of the present invention, not limited to a shape in which a rectangular shape with R-chamfered faces being formed on corner portions thereof as shown by through holes 11 and 12 in Fig. 1, the shape may be prepared as a round shape as indicated by a jig for firing ceramics 20 shown in Fig. 2-1. With respect to the other shapes of the through hole, for example, a rectangular shape with C-chamfered faces being formed on corner portions thereof (octagonal shape), a rectangular shape, a triangular shape, a hexagonal shape and an elliptical shape are proposed.
The jig for firing ceramics 20, shown in Figs. 2-1 (a) and 2-1(b), are the same as the jig for firing ceramics 10 shown in Fig. 1, except for the shape and position of each through hole 21 formed in the bottom face thereof.

Moreover, in the case where through holes are formed in the bottom face of the jig for firing ceramics as shown in Fig. 1 and Fig. 2-1, the area of the portion on which the through holes are formed is preferably set in a range of 0.5 to 60%, with respect to the bottom face area of the jig for firing ceramics.
In the case where the area of the portion on which the through holes are formed is less than 0.5%, it sometimes becomes difficult to sufficiently obtain the effects of forming the through holes as described above; in contrast, the area thereof exceeding 60% tends to cause an insufficient strength in the jig for firing ceramics. Moreover, as will be described below, it is preferable to form a carbon-powder holding area at a portion on the bottom face.
The lower limit of the rate of the area of the portion at which the through holes are formed is preferably set to 10%. The upper limit of the rate of the area of the portion at which the through holes are formed is preferably set to 40%, more preferably, to 30%.

Here, in the jig for firing ceramics of the present invention, the bottom face refers to a portion at which the ceramic formed body is placed, independent of whether or not a wall portion is formed at the side thereof.
The area on the bottom face refers to an area of a portion surrounded by an outer edge when the jig for firing ceramics is viewed from the bottom, and in the case where a cut-out portion is further formed, the area of the cut-out portion is also included in the area on the bottom face.

The formation position of the through holes is preferably at the bottom face of the jig for firing ceramic; however, not limited to the bottom face, the side face may be the formation position of the through holes in the case where the shape of the jig for firing ceramics is a box-shape as shown in Fig. 1. Of course, through holes may be formed on both on the bottom face and the wall face.

The jig for firing ceramics of the present invention preferably has a carbon-powder holding area at a portion on the bottom face.
The reason for this structure, which will be described later in detail, is because upon firing a silicon carbide formed body, by spreading carbon powder all over the inside of the jig for firing ceramics together with the silicon carbide formed body, it becomes possible to prevent occurrence of dispersions in the bending strength and occurrence of cracks and the like in the silicon carbide sintered body to be manufactured.
Here, the carbon-powder holding area corresponds to each of areas 13, 23 and 24 surrounded by broken lines in the jig for firing ceramics, for example, shown in Figs. 1 and 2.

Figs. 2-2 and 3 are plan views that show another example of the jig for firing ceramics of the present invention. Fig. 2-2 shows a jig for firing ceramics in which through holes and cut-out portions are formed, and Fig. 2-3 shows a jig for firing ceramics in which only cut-out portions are formed.
In the jig for firing ceramics 120 shown in Fig. 2-2, through holes 121 and cut-out portions 125 are formed on the bottom face thereof.
In the case where the cut-out portions 125 are formed together with the through holes 121 in this structure, in the same manner as the jig for firing ceramics 10, a convection easily takes place inside each jig for firing ceramics when the jigs for firing ceramics are piled up in multiple stages and used, and an ambient atmospheric gas is allowed to flow inside the jigs for firing ceramics 120 that are piled up; thus, the ambient temperature on the periphery of each of ceramic formed bodies placed inside each of the jig for firing ceramics 120 is virtually equalized independent of positions of the respective jig for firing ceramics and positions at which they are placed inside each jig for firing ceramics, and the component concentrations (for example, component concentrations, such as SiC, SiO, Si and the like, in a silicon carbide formed body) in the ambient atmospheric gas on the periphery of each of ceramic formed bodies are also equalized so that each of the ceramic formed bodies can be fired under uniform conditions.
Moreover, in the jig for firing ceramics 120, a wall portion 126 is formed on the side thereof so that the wall portion 126 is allowed to function as a base-supporting portion upon piling up the jig for firing ceramics in multiple stages.
Here, areas 123 and 124 surrounded by broken lines correspond to carbon-powder holding areas.

In a jig for firing ceramics 220 shown in Fig. 2-3, cut-out portions 225 are formed on respective sides of the bottom face.
In the case where only the cut-out portions 225 are formed as described above also, in the same manner as the jig for firing ceramics 10, a convection easily takes place inside each jig for firing ceramics 10 when the jigs for firing ceramics are piled up in multiple stages and used, and an ambient atmospheric gas is allowed to flow inside the jigs for firing ceramics 220 that are piled up; thus, the ambient temperature on the periphery of each of ceramic formed bodies placed inside each of the jig for firing ceramics 220 is virtually equalized independent of positions of the respective jig for firing ceramics and positions at which they are placed inside each jig for firing ceramics, and the component concentrations (for example, component concentrations, such as SiC, SiO and Si, in a silicon carbide formed body) in the ambient atmospheric gas on the periphery of each of ceramic formed bodies are also equalized so that each of the ceramic formed bodies can be fired under uniform conditions.
Moreover, in the jig for firing ceramics 220, pillar members 226 are placed on the respective four corners of the bottom face, and these wall portions 226 are allowed to function as base-supporting portions upon piling up the jig for firing ceramics in multiple stages.
Here, an area 223 surrounded by a broken line occupies a carbon-powder holding area.

As shown in Figs. 1 to 2-3, in the jig for firing ceramics of the present invention, only the through holes may be formed on a portion of the bottom face, or both of the through holes and the cut-out portions maybe formed thereon, or only the cut-out portions may be formed thereon.

With respect to the shape in its plan view of each cut-out portion formed in the jig for firing ceramics of the present invention, not limited to a semi-circular shape as shown in Figs. 2-2 and 2-3, any desired shapes, such as a semi-elliptical shape, a rectangular shape, a polygonal shape and the like, may be used.

Fig. 2-4 (a) is a plan view that shows still another example of the jig for firing ceramics of the present invention, and Fig. 2-4(b) is a cross-sectional view taken along line A-A of the jig for firing ceramics shown in Fig. 2-4(a).
Fig. 2-4 shows a jig for firing ceramics in which through holes and cut-out portions are formed.
The jig for firing ceramics 320 shown in Figs. 2-4 (a) and 2-4(b) have a box-shape with the upper face being open, and a plurality of through holes 321 are formed in the bottom face, and a plurality of cut-out portions 325, each of which is connected to the bottom face and a side face, are formed thereon.
In the case where the cut-out portions 325 are formed together with the through holes 321 as described above also, in the same manner as the jig for firing ceramics 10, a convection easily takes place inside each jig for firing ceramics when the jigs for firing ceramics are piled up in multiple stages and used, and an ambient atmospheric gas is allowed to flow inside the jigs for firing ceramics 320 that are piled up; thus, the ambient temperature on the periphery of each of ceramic formed bodies placed inside each of the jig for firing ceramics 320 is virtually equalized independent of positions of the respective jig for firing ceramics and positions at which they are placed inside each jig for firing ceramics, and the component concentrations (for example, concentrations of components, such as SiC, SiO, Si and the like, in a silicon carbide formed body) in the ambient atmospheric gas on the periphery of each of ceramic formed bodies are also equalized so that each of the ceramic formed bodies can be fired under uniform conditions.
Moreover, in the jig for firing ceramics 320, the wall portion 326 of the side face is allowed to function as a base-supporting portion upon piling up the jig for firing ceramics in multiple stages.
Here, areas 323 and 324 surrounded by broken lines correspond to carbon-powder holding areas.

Fig. 2-5 (a) is a plan view that shows still another example of the jig for firing ceramics of the present invention; Fig. 2-5(b) is a cross-sectional view taken along line A-A of the jig for firing ceramics shown in Fig. 2-5(a); and Fig. 2-5(c) is a cross-sectional view taken along line B-B of the jig for firing ceramics shown in Fig. 2-5(a).
Fig. 2-5 shows a jig for firing ceramics in which only the cut-out portions are formed.
The jig for firing ceramics 420 shown in Figs. 2-5(a) to 2-5(c) have a box-shape with the upper face being open, and a plurality of cut-out portions 425 each of which is connected to the bottom face and side face are formed therein.
In the case where the cut-out portions 425 are formed as described above also, in the same manner as the jig for firing ceramics 10, a convection easily takes place inside each jig for firing ceramics when the jigs for firing ceramics are piled up in multiple stages and used, and an ambient atmospheric gas is allowed to flow inside the jigs for firing ceramics 420 that are piled up; thus, the ambient temperature on the periphery of each of ceramic formed bodies placed inside each of the jig for firing ceramics 420 is virtually equalized independent of positions of the respective jig for firing ceramics and positions at which they are placed inside each jig for firing ceramics, and the component concentrations (for example, concentrations of components, such as SiC, SiO, Si and the like, in a silicon carbide formed body) in the ambient atmospheric gas on the periphery of each of ceramic formed bodies are also equalized so that each of the ceramic formed bodies can be fired under uniform conditions.
Moreover, in the jig for firing ceramics 420, the wall portion 426 of the side face is allowed to function as a base-supporting portion upon piling up the jig for firing ceramics in multiple stages.
Here, areas 423 and 424 surrounded by broken lines correspond to carbon-powder holding areas.

In the jig for firing ceramics in which the cut-out portions each of which is connected to the bottom face and side face are formed as shown in Figs. 2-4 and 2-5, of course, the shape in the plan view of the cut-out portion formed in the bottom face is not particularly limited to a semi-circular shape, and the shape in the front view and the shape in the side view of the cut-out portion formed on the side face are not particularly limited to a rectangular shape as shown in the figures, and may be formed into shapes such as a semi-circular shape, a semi-elliptical shape, a polygonal shape and the like.
Moreover, in the case where the cut-out portions are formed in the box-shaped jig for firing ceramics, each of the cut-out portions is not particularly limited to a cut-out portion which is connected to the bottom face and side face as shown in Figs. 2-4 and 2-5, and, for example, the cut-out portion may be formed only on the bottom face, with no cut-out portion being formed on the side face.
Furthermore, in the box-shaped jig for firing ceramics, a through hole and/or a cut-out portion may be formed in the side face in a separate manner from the through hole and the cut-out portion formed in the bottom face.

Fig. 2-6 (a) is a plan view that shows still another example of the jig for firing ceramics of the present invention; Fig. 2-6(b) is a cross-sectional view taken along line A-A of the jig for firing ceramics shown in Fig. 2-6(a); and Fig. 2-6(c) is a perspective view that schematically shows one example of a base-supporting portion that is used upon piling up the jig for firing ceramics in multiple stages.
Figs. 2-6 (a) and 2-6 (b) show a flat jig for firing ceramics that is formed by only the bottom face without a wall portion.
The jig for firing ceramics 520 shown in Figs. 2-6 (a) and 2-6(b) has a flat plate shape without a wall portion, and in the same manner as the jig for firing ceramics 20 shown in Fig. 2-1, a plurality of through holes 521 are formed in the bottom face.
In the case of the jig for firing ceramics 520 also, since the through holes 521 are formed in this manner, a convection easily takes place inside each jig for firing ceramics 520 even when the jigs for firing ceramics are piled up in multiple stages and used, in the same manner as the jig for firing ceramics 10, and an ambient atmospheric gas is allowed to flow inside the jigs for firing ceramics 520 that are piled up; thus, the ambient temperature on the periphery of each of ceramic formed bodies placed inside each of the jig for firing ceramics 520 is virtually equalized independent of positions of the respective jig for firing ceramics and positions at which they are placed inside each jig for firing ceramics, and the component concentrations (for example, component concentrations, such as SiC, SiO, Si and the like, in a silicon carbide formed body) in the ambient atmospheric gas on the periphery of each of ceramic formed bodies are also equalized so that each of the ceramic formed bodies can be fired under uniform conditions.
Here, in Fig. 2-6, areas 523 and 524 surrounded by broken lines correspond to carbon-powder holding areas.

In the case where the jigs for firing ceramics 520 are piled up in multiple stages and used, since the jig for firing ceramics 520 is not provided with a wall portion that functions as a base-supporting portion, the base-supporting portion needs to be prepared in a separate manner.
More specifically, for example, a square tubular base-supporting portion 526 as shown in Fig. 2-6(c) is interpolated between the jigs for firing ceramics 520 so that the flat-plate-shaped jigs for firing ceramics 520 can be piled up in multiple stages. With respect to the base-supporting portion 526 of this type, a through hole may be formed therein, or a cut-out portion may be formed at a portion thereof in a degree so as not to intervene with the piling-up process of the jig for firing ceramics.
Here, the base-supporting portion 526 is prepared as a tubular base-supporting portion; however, the base-supporting portion to be used upon piling up the flat-plate-shaped jig for firing ceramics is not necessarily limited to such a shape, and, for example, a plurality of base-supporting portions having shapes, such as a flat-plate shape, a rectangular pillar shape, a cylindrical shape and the like, may be used, and these base-supporting portions may be placed on the periphery of the jig for firing ceramics 520 so that the jig for firing ceramics 520 may be superposed one after another.

Moreover, in the jig for firing ceramics shown in Figs. 2-2 to 2-6 also, the rate of the area occupied by the portion in which through holes and/or cut-out portions are/is formed with respect to the bottom face of the jig for firing ceramics is preferably set in the range described earlier.

As described above, in the jig for firing ceramics of the present invention, since a through hole and/or a cut-out portion are/is formed at a portion thereof, the above-mentioned effects are exerted.
Moreover, as shown in Figs. 1 to 2-5, in the jig for firing ceramics of the present invention, the portions that function as the base-supporting portions upon piling up the jig for firing ceramics in multiple stages may be formed on the entire sides of the bottom face, or may be formed on a portion of each side. However, from the viewpoint of preventing the occurrence of warping upon use, the portion that functions as the base-supporting portion is preferably formed on the entire sides of the bottom face.
In the case of the flat-plate-shaped jig for firing ceramics as shown in Fig. 2-6, base-supporting portions are prepared in a separate manner, and the jig for firing ceramics can be piled up by using these.

With respect to the material for the jig for firing ceramics, for example, carbon materials and the like may be used.
Moreover, the carbon material may be prepared as porous carbon having pores.

The reason why carbon powder is spread all over the bottom face of the jig for firing ceramics is explained as follows:
In a conventional manufacturing method for a porous silicon carbide sintered body, a silicon carbide formed body that has been subjected to a degreasing process contains about 3% of SiO₂ in the silicon carbide formed body owing to manufacturing conditions, degreasing conditions and the like of the material. However, in the next firing process, a heating process is carried out at extremely high temperatures such as 2000°C or more at the highest temperature; thus, SiO₂ in the silicon carbide formed body is sublimated and discharged from the silicon carbide formed body. Moreover, carbon is present in the silicon carbide formed body although the amount thereof is very small, and since the substance that forms the jigs for firing to be used in the firing process and the base-supporting members on which the silicon carbide formed body is placed is carbon, a reaction as indicated by the following reaction formula (1) proceeds between the carbon and SiO₂ to generate SiO gas.

SiO₂ + C → SiO + CO ... (1)

Moreover, a reaction as indicated by the following reaction formula (2) proceeds between the SiO gas thus generated and carbon that is present in the silicon carbide formed body as well as carbon forming the jigs for firing:

SiO + 2C → SiC + CO (2)

In other words, as the firing process progresses, the carbon that is present in the silicon carbide formed body and the carbon forming the jigs for firing are gradually consumed by sublimated SiO₂ and SiO gas.

However, as described earlier, the amount of carbon that is present in the silicon carbide formed body that has been subj ected to a degreasing process is very small, and soon consumed and eliminated through the reactions indicated by the above-mentioned reaction formulas (1) and (2). Moreover, the carbon forming the jigs for firing and the like is capable of serving as a good supplying source of carbon in the reactions indicated by the reaction formulas (1) and (2); however, when the surface portion of the jigs for firing has been formed into SiC, the jigs for firing can no longer supply carbon to the reactions indicated by the above-mentioned reaction formulas (1) and (2).

In other words, as the firing process progresses, the amount of carbon to be supplied to the reactions indicated by the above-mentioned reaction formulas (1) and (2) decreases, and in contrast, the concentration of SiO gas increases. As a result, a reaction as indicated by the following reaction formula (3) progresses between the high concentration SiO gas and SiC forming the most portion of the silicon carbide formed body:

SiO + SiC 2Si + CO ... (3)

For this reason, Si is contained in the silicon carbide formed body during the firing process; thus sintering is difficult to progresses in the silicon carbide formed body of this type. Consequently, although the silicon carbide particles themselves are allowed to grow grains, so-called necking, that is, combination between the silicon carbide particles having grown grains, is not sufficiently formed to cause dispersions in the strength of the porous silicon carbide sintered body to be manufactured and the subsequent degradation in the strength.

Moreover, when the surfaces of the jigs for firing have been formed into SiC due to the reaction indicated by the above-mentioned reaction formula (2), these members become too hard, with irregularities being formed on the surfaces thereof. For this reason, portions at which the silicon carbide formed body is made in contact with the jig for firing during the firing process and portions at which the silicon carbide formed body comes into contact with the jig for firing that has been converted into SiC due to vibration or the like during the firing process tend to have cracks. In order to prevent this phenomenon, the present invention prepares an area for holding carbon powder at a portion on the bottom face of the jig for firing ceramics.

The jig for firing ceramics having the area for holding carbon powder at a portion of the base surface is preferably used for manufacturing a porous ceramic body made from carbide ceramics, and more preferably used for manufacturing a porous ceramic body made from silicon carbide. In the case where it is used for manufacturing a porous ceramic body made from a material such as nitride ceramics, oxide ceramics and the like, the area used for holding carbon powder may be prepared, or does not have to be prepared.
Moreover, in the case where it is used for manufacturing nitride ceramics and oxide ceramics, in place of carbon powder, inorganic powder, which makes ambient atmospheric component concentrations on the periphery of the ceramic formed body uniform, may be used.

The following description will discuss a manufacturing method for the porous ceramic body of the present invention.
The manufacturing method for a porous ceramic body of the present invention is a method of manufacturing a porous ceramic body in which, after a pillar-shaped ceramic formed body containing ceramic powder and a binder has been degreased, the pillar-shaped ceramic formed body is placed in a jig for firing and fired, comprising the step of: using a jig for firing ceramics having a through hole and/or a cut-out portion formed in a portion thereof, by piling it up in multiple stages as said jig for firing.

In the above-mentioned manufacturing method for a porous ceramic body, said through hole and/or cut-out portion are/is formed in the bottom face of the jig for firing ceramics, and the area of the portion on the bottom face of said jig for firing ceramics in which said through hole and/or cut-out portion are/is formed occupies 0.5 to 60% of the area of said bottom face.
Moreover, in the manufacturing method for a porous ceramic body, the jig for firing ceramics preferably has a carbon-powder holding area in the bottom face.
In the manufacturing method for a porous ceramic body of the present invention, the above-mentioned jig for firing ceramics of the present invention may be used as a jig for firing ceramics.

The following description will discuss the manufacturing method for a porous ceramic body of the present invention, by exemplifying a case in which a porous ceramic body is manufactured by using a silicon carbide formed body as a ceramic formed body.
Fig. 3 (a) is a front view that shows a state in which jigs for firing ceramics, shown in Fig. 1, which have been piled up in multiple stages, are transported into a firing furnace, and Fig. 3(b) is a front view that shows a state in which silicon carbide formed bodies are piled up through base-supporting members.

In the manufacturing method for the porous ceramic body of the present invention, first, a pillar-shaped silicon carbide formed body containing silicon carbide powder and a binder is formed. Here, if necessary, metal silicon may be added thereto so as to be set in a range from 0 to 45% by weight with respect to the entire weight.
With respect to the structure of the silicon carbide formed body, not particularly limited, for example, as explained in the Background of the Invention, a pillar-shaped formed body in which a number of through holes are placed in parallel to one another in the length direction with a partition wall interpolated in between and a pillar-shaped formed body which contains a number of pores communicated with one another formed thereinmaybe used. Moreover, with respect to the shape thereof, not particularly limited, any desired shape, such as a cylindrical shape, an elliptical cylindrical shape, a rectangular pillar shape and the like, may be used. Here, in the following description, a pillar-shaped formed body in which a number of through holes are placed in parallel to one another in the length direction with a partition wall interpolated in between is used as the silicon carbide formed body.

With respect to the particle size of silicon carbide powder, although not particularly limited, those which are less susceptible to shrinkage in the succeeding firing process are preferably used, and for example, mixed powder, prepared by combining 100 parts by weight of powder having an average particle size from 0.3 to 50 µm with 5 to 65 parts by weight of powder having an average particle size from 0.1 to 1.0 µm, is preferably used.

With respect to the above-mentioned binder, not particularly limited, examples thereof include: methylcellulose, carboxy methylcellulose, hydroxy ethylcellulose, polyethylene glycol, phenolic resin, epoxy resin and the like.
In general, the blended amount of the above-mentioned binder is preferably set to approximately 1 to 10 parts by weight with respect to 100 parts by weight of the silicon carbide powder.

With respect to the dispersant solution, not particularly limited, examples thereof include: an organic solvent such as benzene; alcohol such as methanol; water and the like.
An appropriate amount of the above-mentioned dispersant solution is mixed therein so that the viscosity of the mixed composition is set within a fixed range.

After these silicon carbide powder, binder, dispersant solution and the like have been mixed by using an attritor or the like, the resulting mixture is sufficiently kneaded by using a kneader or the like, and then extrusion-formed and dried to manufacture a pillar-shaped silicon carbide formed body containing the silicon carbide powder and the binder.

Thereafter, the silicon carbide formed body manufactured in the above-mentioned process is subjected to a degreasing process.
In this degreasing process of the silicon carbide formed body, normally, after the silicon carbide formed body has been placed in the jig for firing ceramics of the present invention, the jig for firing ceramics is transported to a degreasing furnace, and heated to 400 to 650°C in an oxygen-containing atmosphere.
Thus, the binder and the like are volatilized and decomposed to be eliminated so that virtually only the silicon carbide powder remains.

Upon placing the silicon carbide formed body in the jig for firing ceramics, base-supporting members 35 may be placed of the bottom face of the jig for firing ceramics 10 so as to support the silicon carbide formed body with a gap from the bottom face, as shown in Fig. 3(a).
Here, the base-supporting members may be integrally formed with the jig for firing ceramics. By placing the base-supporting members, it becomes possible to prevent the degreased body and the sintered body of the silicon carbide formed body from sticking to the bottom face of the jig for firing ceramics to cause cracks and the like.

In the firingprocess, the degreased silicon carbide formed body 32 is placed in a jig for firing ceramics 10 of the present invention in which through holes 11 and 12 are formed in the bottom face thereof, as shown in Fig. 3(a), and the jigs for firing ceramics 10 on which the silicon carbide formed bodies 32 are placed are piled up in a plurality of stages to form a piled-up body, and a lid 33 is placed on the uppermost portion. The piled-up body is then heated by a heater 31 so that the silicon carbide formed bodies 32 are fired. In this firing process, the degreased silicon carbide formed bodies 32 are heated at 1400 to 2000°C in an inert gas atmosphere, such as nitrogen, argon and the like, so that the silicon carbide powder is sintered to manufacture a porous silicon carbide sintered body.
Since the silicon carbide formed body after the degreasing process is poor in the mechanical strength and easily broken, the jig for firing ceramics 10 is preferably designed so as to compatibly serve as a degreasing jig. Thus, after the degreasing process, the jig for firing ceramics 10 compatibly serving as the degreasing jig is preferablypiledup in a plurality of stages, and used for the firing process.

In the present invention, for example, the piled-up body is placed on a supporting base 37, and the piled-up body is heated by heaters 31 attached to the upper and lower potions of a muffle 34 while being transported through the muffle 34; thus, a continuous firing method may be used. Here, a through hole may be formed in the supporting base 37, or does not have to be formed therein; however, it is preferable to prepare the through hole.
In the case where a through hole is formed in the supporting base with the through hole formed in the supporting base being allowed to communicate with a through hole formed in the bottom face of the jig for firing ceramics, an ambient atmospheric gas is allowed to easily flow inside the jig for firing ceramics; thus, the temperature of the ambient atmosphere on the periphery of the ceramic formed body placed inside the jig for firing ceramics is made more uniform, and concentrations of components in the ambient atmosphere, such as SiC, SiO, Si an the like, on the periphery of the ceramic formed body are also made more uniform so that each of the ceramic formed bodies can be fired under uniform conditions.
Moreover, one set of jigs for firing ceramics piled up in multiple stages may be placed on the supporting base 37, or two sets thereof may be placed as shown in Fig. 3, or three or more sets thereof may be placed thereon.

Since the base-supporting members 35 to be placed on the jig for firing ceramics 10 require sufficient heat resistance so as to withstand high temperatures at the time of firing, a ceramic material having such heat resistance is preferably used for the material thereof.
With respect to the ceramic material, those having a comparatively high heat conductivity are preferably used, and examples thereof include carbon, silicon carbide, aluminum nitride, silicon nitride and the like.

In the series of processes from the degreasing process to the firing process, as described earlier, the silicon carbide formed body, placed on the jig for firing ceramics through the base-supporting members, as it is, is preferably subjected to the degreasing process and the firing process. Thus, the degreasing process and the firing process can be carried out efficiently, and it becomes possible to prevent the silicon carbide formed body from being damaged in a replacing operation and the like.

In this manner, by using the manufacturing method for a porous ceramic body of the present invention, the inside of the silicon carbide formed body can be heated to a virtually uniform temperature so that dispersions in the average pore diameter in the sintered porous silicon carbide sintered body can be made small and the porous silicon carbide sintered body having virtually uniform bending strength can be obtained.
Moreover, even when the firing process is carried out on silicon carbide formed bodies piled up in a plurality of stages, the dispersions in temperature in the respective stages can be made smaller so that it is possible to manufacture porous silicon carbide sintered bodies having a fixed average pore diameter and bending strength stably.

In the above-mentioned embodiments, explanations have beengivenbyexemplifyingacase inwhichaporous silicon carbide sintered body is manufactured by firing a silicon carbide formed body; however, with respect to the ceramic material forming the porous ceramic body to be manufactured, not particularly limited to silicon carbide, examples thereof include: nitride ceramics, such as aluminum nitride, silicon nitride, boron nitride, titanium nitride and the like; carbide ceramics, such as zirconium carbide, titanium carbide, tantalum carbide, tungsten carbide and the like; and oxide ceramics, such as alumina, zirconia, cordierite, mullite, silica and the like. Moreover, the porous ceramic body may be prepared as a material made from two or more materials, such as a composite between silica and silicon carbide, and aluminum titanate. Here, the pore diameter of these porous ceramic bodies is preferably set in a range from 5 to 50 µm, and the porosity thereof is preferably set in a range from 30 to 70%.

With respect to the use of the resulting porous ceramic body, not particularly limited, the porous ceramic body may be used for various applications, and, for example, it is used for a member and the like that constitute a ceramic filter as shown in Fig. 4.

### EXAMPLES

The following description will discuss specific examples; however, the present invention is not intended to be limited only by these examples.

### (Example 1)

(1) Powder of α-type silicon carbide having an average particle size of 10 µm (60% by weight) and powder of α-type silicon carbide having an average particle size of 0.5 µm (40% by weight) were wet-mixed, and 5 parts by weight of an organic binder (methyl cellulose) and 10 parts by weight of water were added to 100 parts by weight of the resulting mixture and kneaded to obtain amixedcomposition. Next, after a slight amount of a plasticizer and a lubricant had been added and kneaded therein, the resulting mixture was extrusion-formed so that a silicon carbide formed body was manufactured.

(2) Next, after the above-mentioned silicon carbide formed body had been dried at 100°C for 3 minutes by using a micro-wave drier, this was further dried at 110°C for 20 minutes by using a hot air drier. After the dried silicon carbide formed body had been cut, the through holes were sealed with a sealing paste (plug) made from silicon carbide

(3) Successively, by using each jig for firing ceramics which was made from carbon (DSG-332; made by SEC Co., Ltd.) and had through holes formed therein as shown in Fig. 1, ten dried silicon carbide formed bodies 32 were placed therein through base-supporting members made from carbon. Then, these jigs for firing ceramics were piled up in five stages, and a plate-shaped lid was placed on the uppermost portion thereof. Two rows of piled-up bodies of this type were placed on a supporting base 17. Here, the area of portions in which the through holes were formed on the bottom face of the jig for firing ceramics occupied 0.5% of the area on the bottom face of the jig for firing ceramics.

(4) Next, the jig for firing ceramics on which the silicon carbide formed bodies were placed were transported into a continuous degreasing furnace so that they were heated at 500°C in a mixed gas atmosphere of air having an oxygen concentration of 8% and nitrogen so as to carry out a degreasing process; thus, silicon carbide degreased bodies were manufactured.

With the silicon carbide degreased bodies being placed on the jig for firing ceramics, the jig for firing ceramics were transported and subjected to a firing process at 2200°C in a normal-pressure argon ambient atmosphere for about 3 hours so that porous silicon carbide sintered bodies having a square pillar shape were manufactured.

(5) Next, by using a heat resistant sealing material paste containing 30% by weight of alumina fibers having a fiber length of 0.2 mm, 21% by weight of silicon carbide particles having an average particle size of 0.6 µm, 15% by weight of silica sol, 5.6% by weight of carboxymethyl cellulose and 28.4% by weight of water, sixteen (4 x 4) square-pillar-shaped porous silicon carbide sintered bodies were combined with one another by using the above-mentioned method, and this was then cut by using a diamond cutter to form a cylindrical-shaped ceramic block having a diameter of 144 mm and a length of 150 mm.
Here, the porous silicon carbide sintered bodies that were used upon combining sixteen porous silicon carbide sintered bodies were those silicon carbide sintered bodies placed in the jig for firing ceramics on the same stage on the same supporting base or those silicon carbide sintered bodies placed on the same jig for firing ceramics.
Thus, twenty ceramic blocks, each of which was formed by using those silicon carbide sintered bodies placed in the jig for firing ceramics on the same stage on the same supporting base or those silicon carbide sintered bodies placed on the same jig for firing ceramics, were manufactured, and a ceramic filter was manufactured by using these ceramic blocks through a method, which will be described later.

After the above-mentioned process, ceramic fibers made from alumina silicate (shot content: 3%, fiber length: 0.1 to 100 mm) (23.3% by weight), which served as inorganic fibers, silicon carbide powder having an average particle size of 0.3 µm (30.2% by weight), which served as inorganic particles, silica sol (SiO₂ content in the sol: 30% by weight) (7% by weight), which served as an inorganic binder, carboxymethyl cellulose (0.5% by weight), which served as an organic binder, and water (39% by weight) were mixed and kneaded to prepare a sealing material paste.

Next, a sealing material paste layer of 1.0 mm in thickness was formed on the peripheral portion of the ceramic block by using the sealing material paste. Then, the sealing material paste layer was dried at 120°C to manufacture a cylindrical-shaped ceramic filter.

Here, in the sealing material paste to be used upon combining the porous silicon carbide sintered bodies as well as in the sealing material paste to be applied to the periphery of the ceramic block, with respect to the inorganic fibers to be blended in the sealing material paste, the lower limit of the fiber length is preferably set to 5 µm and the upper limit of the fiber length is preferably set to 100 mm.
The fiber length less than 5 µm tends to cause insufficient elasticity in the resulting sealing material layer, while the fiber length exceeding 100 mm tends to cause the inorganic fibers to be pill-state fibers and the subsequent degradation in dispersion of the inorganic particles.
The upper limit of the fiber length of the inorganic fibers is preferably set to 100 µm. The fiber length of 100 µm or less easily makes the thickness of the sealing material layer thinner.

### (Examples 2 to 7)

The same processes as Example 1 were carried out, except that the rate of the areas of portions on the bottom face of the jig for firing ceramics in which through holes were formed in the jig for firing ceramics to the area on the bottom face of the jig for firing ceramics was changed as shown in Table 1, so that ceramic filters were manufactured.

### (Examples 8 to 14)

The same processes as Example 1 were carried out, except that the jig for firing ceramics was changed to the one shown in Fig. 2-1 and that the rate of the areas of portions on the bottom face in which through holes were formed in the jig for firing ceramics to the area on the bottom face of the jig for firing ceramics was changed as shown in Table 1, so that ceramic filters were manufactured.

### (Examples 15 to 21)

The same processes as Example 1 were carried out, except that the jig for firing ceramics was changed to the one shown in Fig. 2-2 and that the rate of the areas of portions on the bottom face in which through holes and cut-out portions were formed in the jig for firing ceramics to the area on the bottom face of the jig for firing ceramics was changed as shown in Table 1, so that ceramic filters were manufactured.

### (Examples 22 to 28)

The same processes as Example 1 were carried out, except that the jig for firing ceramics was changed to the one shown in Fig. 2-3 and that the rate of the areas of portions on the bottom face in which cut-out portions were formed in the jig for firing ceramics to the area on the bottom face of the jig for firing ceramics was changed as shown in Table 1, so that ceramic filters were manufactured.

### (Examples 29 to 35)

The same processes as Example 1 were carried out, except that the jig for firing ceramics was changed to the one shown in Fig. 2-4 and that the rate of the areas of portions on the bottom face in which through holes and cut-out portions were formed in the jig for firing ceramics to the area on the bottom face of the jig for firing ceramics was changed as shown in Table 1, so that ceramic filters were manufactured.

### (Examples 36 to 42)

The same processes as Example 1 were carried out, except that the jig for firing ceramics was changed to the one shown in Fig. 2-5 and that the rate of the areas of portions on the bottom face in which cut-out portions were formed in the jig for firing ceramics to the area on the bottom face of the jig for firing ceramics was changed as shown in Table 1, so that ceramic filters were manufactured.

### (Examples 43 to 49)

The same processes as Example 1 were carried out, except that the jig for firing ceramics was changed to the one shown in Fig. 2-6, that the rate of the areas of portions on the bottom face in which through holes and cut-out portions were formed in the jig for firing ceramics to the area on the bottom face of the jig for firing ceramics was changed as shown in Table 1, and that jig for firing ceramics were piled up by using square tubular base-supporting members as shown in Fig. 2-6(c), so that ceramic filters were manufactured.

### (Example 50)

The same processes as Example 4 were carried out except that the following material was used as the sealing material paste so that ceramic filters were manufactured.
With respect to the sealing material paste to be used for combining square-pillar-shaped porous silicon carbide sintered bodies, the material having the same composition (see (5) in Example 1) as used in Example 1 was used except that alumina fibers having a fiber length of 20 µm were blended in place of alumina fibers having a fiber length of 0.2 mm, and with respect to the sealing material paste to be used for forming the sealing material paste layer on the periphery of the ceramic block, the material having the same composition (see (5) in Example 1) as used in Example 1 was used except that ceramic fibers (shot content: 3%, fiber length: 5 to 100 µm) made from alumina silicate were blended as inorganic fibers.

### (Comparative Example 1)

The same processes as Example 1 were carried out, except that the jig for firing ceramics was changed to the one having a shape shown in Fig. 1 with no through hole formed in the bottom face, so that ceramic filters were manufactured.

### Evaluation Test

### (1) Average pore diameter

In compliance with JIS R 1655, by using a fine-pore distribution measuring device (AutoPore III9405, made by Shimadzu Corporation) in which a mercury press-in method is adopted, with respect to 50 porous silicon carbide sintered bodies in the respective jig for firing ceramics, manufactured in respective Examples 1 to 50 and Comparative Example 1, the center portion of each of the bodies is cut into a cube having 1 cm in each side to prepare a sample, and the fine-pore distribution was measured through the mercury press-in method in a range of the thin-pore diameter from 0.2 to 500 µm, and the average thin-pore diameter at this time was calculated (under a condition of 4V/A) so that the average value and standard deviation of the average fine-pore diameter were calculated. The results thereof are shown in Table 1.

### (2) Strength

In compliance with JIS R 1601, with respect to 50 porous silicon carbide sintered bodies in the respective jig for firing ceramics manufactured in respective Examples 1 to 50 and Comparative Example 1, each of the bodies was subjected to a bending strength test using three bending points under conditions of a cross head speed of 0.5 mm/min and a span of 125 mm, by using a measuring device, Instron 5582, and the cross-sectional secondary moment was calculated to obtain the strength. The average values are shown in Table 1.

### (3) Measurements on pressure loss

With respect to 20 ceramic filters relating to Examples 1 to 50 and Comparative Example 1 manufactured by using those porous silicon carbide sintered bodies placed in the jig for firing ceramics on the same stage on the same supporting base or those silicon carbide sintered bodies placed on the same jig for firing ceramics, each of the sintered bodies was measured in its initial pressure loss under a flow rate of 1000 N·m³/h, and standard deviations thereof were calculated. The results thereof are shown in Table 1.

**Table 1-1**

| | Used jig | Rate of area of through Hole and/or cut-out portion | Ceramic filter | | | | |
|---|---|---|---|---|---|---|---|
| | | | Average pore diameter (µm) | Standard deviation of average pore diameter | Initial pressure loss (kPa) | Standard deviation of initial pressure loss | Filter strength (MPa) |
| Example 1 | Fig. 1 | 0.5 | 10.1 | 0.9 | 16.3 | 0.33 | 47 |
| Example 2 | Fig. 1 | 10 | 10.4 | 0.8 | 16.1 | 0.26 | 46 |
| Example 3 | Fig. 1 | 20 | 10.5 | 0.8 | 16.0 | 0.26 | 46 |
| Example 4 | Fig. 1 | 30 | 10.5 | 0.8 | 16.0 | 0.25 | 46 |
| Example 5 | Fig. 1 | 40 | 10.3 | 0.8 | 16.0 | 0.22 | 44 |
| Example 6 | Fig. 1 | 60 | 10.0 | 0.7 | 17.6 | 0.21 | 42 |
| Example 7 | Fig. 1 | 70 | 8.8 | 0.6 | 18.5 | 0.18 | 34 |
| Example 8 | Fig.2-1 | 0.5 | 10.2 | 0.9 | 16.2 | 0.38 | 48 |
| Example 9 | Fig. 2-1 | 10 | 10.1 | 0.8 | 16.1 | 0.27 | 46 |
| Example 10 | Fig. 2-1 | 20 | 10.5 | 0.8 | 16.0 | 0.26 | 46 |
| Example 11 | Fig. 2-1 | 30 | 10.5 | 0.8 | 16.0 | 0.24 | 45 |
| Example 12 | Fig. 2-1 | 40 | 10.4 | 0.7 | 16.5 | 0.21 | 44 |
| Example 13 | Fig. 2-1 | 60 | 10.1 | 0.7 | 17.5 | 0.20 | 41 |
| Example 14 | Fig. 2-1 | 70 | 8.8 | 0.6 | 18.4 | 0.19 | 35 |
| Example 15 | Fig.2-2 | 0.5 | 10.1 | 0.8 | 16.0 | 0.35 | 46 |
| Example 16 | Fig.2-2 | 10 | 10.1 | 0.8 | 16.1 | 0.27 | 46 |
| Example 17 | Fig.2-2 | 20 | 10.4 | 0.8 | 16.1 | 0.27 | 44 |
| Example 18 | Fig.2-2 | 30 | 10.5 | 0.7 | 16.3 | 0.25 | 44 |
| Example 19 | Fig.2-2 | 40 | 10.4 | 0.7 | 16.5 | 0.22 | 44 |
| Example 20 | Fig.2-2 | 60 | 10.0 | 0.7 | 17.7 | 0.20 | 42 |
| Example 21 | Fig.2-2 | 70 | 8.8 | 0.6 | 18.6 | 0.20 | 34 |
| Example 22 | Fig.2-3 | 0.5 | 10.3 . | 0.9 | 16.1 | 0.33 | 47 |
| Example 23 | Fig.2-3 | 10 | 10.2 | 0.8 | 16.1 | 0.25 | 45 |
| Example 24 | Fig.2-3 | 20 | 10.4 | 0.8 | 16.0 | 0.25 | 45 |
| Example 25 | Fig.2-3 | 30 | 10.5 | 0.7 | 16.2 | 0.24 | 45 |
| Example 26 | Fig. 2-3 | 40 | 10.5 | 0.8 | 16.6 | 0.20 | 44 |
| Example 27 | Fig.2-3 | 60 | 10.2 | 0.7 | 17.6 | 0.20 | 40 |
| Example 28 | Fig.2-3 | 70 | 9.0 | 0.7 | 18.5 | 0.18 | 33 |

**Table 1-2**

| | Used Jig | Rate of area of through Hole and/or cut-out portion | Ceramic filter | | | | |
|---|---|---|---|---|---|---|---|
| | | | Average pore diameter (µm) | Standard deviation of average pore diameter | Initial pressure loss (kPa) | Standard deviation Filter of strength initial pressure (MPa) loss | |
| Example 29 | Fig. 2-4 | 0.5 | 10.2 | 0.7 | 16.1 | 0.34 | 48 |
| Example 30 | Fig. 2-4 | 10 | 10.1 | 0.8 | 16.1 | 0.26 | 46 |
| Examples 31 | Fig. 2-4 | 20 | 10.5 | 0.7 | 16.1 | 0.26 | 46 |
| Example 32 | Fig. 2-4 | 30 | 10.5 | 0.8 | 16.1 | 0.24 | 46 |
| Example 33 | Fig. 2-4 | 40 | 10.4 | 0.7 | 16.6 | 0.22 | 43 |
| Example 34 | Fig. 2-4 | 60 | 10.1 | 0.7 | 17.5 | 0.21 | 42 |
| Example 35 | Fig. 2-4 | 70 | 8 .8 | 0.7 | 18.5 | 0.19 | 34 |
| Example 36 | Fig. 2-5 | 0.5 | 10.2 | 0.8 | 16.2 | 0.37 | 47 |
| Example 37 | Fig. 2-5 | 10 | 10.1 | 0.8 | 16. 2 | 0.29 | 45 |
| Example 38 | Fig. 2-5 | 20 | 10. 5 | 0.8 | 16.0 | 0.25 | 46 |
| Example 39 | Fig. 2-5 | 30 | 10.5 | 0.8 | 16.1 | 0.24 | 44 |
| Example 40 | Fig. 2-5 | 40 | 10.4 | 0.7 | 16.4 | 0.24 | 44 |
| Example 41 | Fig. 2-5 | 60 | 10.1 | 0.8 | 17.4 | 0.22 | 40 |
| Example 42 | Fig. 2-5 | 70 | 8.9 | 0.6 | 18.4 | 0.18 | 33 |
| Example 43 | Fig. 2-6 | 0.5 | 10. 1 | 0.9 | 16.0 | 0.33 | 46 |
| Example 44 | Fig. 2-6 | 10 | 10.3 | 0.9 | 16.1 | 0.30 | 44 |
| Example 45 | Fig. 2-6 | 20 | 10.4 | 0.8 | 16.0 | 0.29 | 44 |
| Example 46 | Fig. 2-6 | 30 | 10.5 | 0.8 | 16.2 | 0.28 | 44 |
| Example 47 | Fig. 2-6 | 40 | 10.3 | 0.8 | 16.3 | 0.25 | 44 |
| Example 48 | Fig. 2-6 | 60 | 10.3 | 0.8 | 17.3 | 0.24 | 39 |
| Example 49 | Fig. 2-6 | 70 | 9.0 | 0.7 | 18.7 | 0.22 | 34 |
| Example 50 | Fig. 1 | 30 | 10.4 | . 0.8 | 16.1 | 0..25 | 45 |
| Compar. Example 1 | Fig. 1 | 0 | 9.1 | 1.2 | 16.1 | 0.45 | 48 |

As clearly indicated by the results shown in Table 1, in any of the porous silicon carbide sintered bodies relating to Examples 1 to 50, the average pore diameter and the initial pressure loss tend to have dispersions in comparison with the average pore diameter and the initial pressure loss of the porous silicon carbide sintered body relating to Comparative Example 1.

Moreover, as clearly indicated by Examples, the present invention is preferably applied to a manufacturing process for a porous carbide ceramic filter, and in particular, is preferably applied to a manufacturing process for a porous silicon carbide ceramic filter.

### BRIEF DESCRIPTIONS OF THE DRAWINGS

Fig. 1(a) is a plan view that schematically shows one example of a jig for firing ceramics according to the present invention, and Fig. 1 (b) is a cross-sectional view taken along line A-A of the jig for firing ceramics shown in Fig. 1(a).
Fig. 2-1(a) is a plan view that shows another example of the jig for firing ceramics of the present invention, and Fig. 2-1(b) is a cross-sectional view taken along line A-A of the jig for firing ceramics shown in Fig. 2-1(a).
Fig. 2-2 is a plan view that shows still another example of the jig for firing ceramics of the present invention.
Fig. 2-3 is a plan view that shows still another example of the jig for firing ceramics of the present invention.
Fig. 2-4 (a) is a plan view that shows still another example of the jig for firing ceramics of the present invention, and Fig. 2-4(b) is a cross-sectional view taken along line A-A of the jig for firing ceramics shown in Fig. 2-4(a).
Fig. 2-5(a) is a plan view that shows still another example of the jig for firing ceramics of the present invention, Fig. 2-5(b) is a cross-sectional view taken along line A-A of the jig for firing ceramics shown in Fig. 2-5(a), and Fig. 2-5(c) is a cross-sectional view taken along line B-B of the jig for firing ceramics shown in Fig. 2-5(a).
Fig. 2-6 (a) is a plan view that shows still another example of the jig for firing ceramics of the present invention, Fig. 2-6(b) is a cross-sectional view taken along line A-A of the jig for firing ceramics shown in Fig. 2-6(a), and Fig. 2-6(c) is a perspective view that schematically shows one example of a base-supporting portion to be used upon piling up the jig for firing ceramics in multiple stages.
Fig. 3(a) is a cross-sectional view that schematically shows one example of a firing method in which the jig for firing ceramics of the present invention is used, and Fig. 3(b) is a cross-sectional view that shows a state in which base-supporting members are used upon firing.
Fig. 4 is a perspective view that schematically shows a ceramic filter manufactured by using a porous ceramic body.
Fig. 5 (a) is a perspective view that schematically shows a porous silicon carbide sintered body, and Fig. 5(b) is a cross-sectional view taken along line A-A of Fig. 5(a).
Fig. 6(a) is a plan view that schematically shows a conventional jig for firing, and Fig. 6 (b) is a front view that shows a state in which silicon carbide formed bodies are placed inside the jig for firing shown in Fig. 6(a) and piled up.

### REFERENCE NUMERALS

10, 20 Jig for firing ceramic
11, 12, 21 Through holes
13, 23, 24 Carbon powder holding area
31 Heater
32 Silicon carbide formed body

## Claims

1. A manufacturing method for a porous ceramic body,
in which, after a pillar-shaped ceramic formed body containing ceramic powder and a binder and having a number of through holes placed in parallel to one another in the length direction with a partition wall interpolated in between, has been degreased, said pillar-sharped ceramic formed body is placed in a jig (10) for firing and fired,
wherein
said jig (10) for firing has a through hole (11, 12) and/or a cut-out portion formed in a portion thereof,
said manufacturing method comprising the steps of:
using several of said jigs (10) for firing by piling them up in multiple stages, and
placing a plate-shaped lid on the uppermost jig for firing of the piled-up jigs for firing.

2. The manufacturing method for a porous ceramic body according to claim 1,
wherein
said through hole (11, 12) and/or cut-out portion are/is formed in the bottom face of the jig (10) for firing, and
the area of the portion on the bottom face of said jig (10) for firing in which said through hole and/or cut-out portion are/is formed occupies 0.5 to 60% of the area of said bottom face.

3. The manufacturing method for a porous ceramic body according to claim 1 or 2,
wherein
said jig (10) for f iring has a carbon-powder holding area (13) in its bottom face.

## Patentansprüche

1. Herstellungsverfahren für einen porösen keramischen Körper, bei welchem, nachdem ein säulenförmiger, keramisch ausgebildeter Körper, der ein keramisches Pulver und ein Bindemittel enthält und der eine Anzahl von Durchgarsgsöffnungen aufweist, die parallel zueinander in der Längenrichtung mit einer dazwischen eingefügten Trennwand angeordnet sind, entfettet worden ist, der säulenförmige, keramisch ausgebildete Körper in einer Brennschablone (10) angeordnet und gebrannt wird,
wobei
die Brennschablone (10) eine Durchgangsöffnung (11, 12) und/oder einen ausgeschnittenen Teil, der in einem Teil davon ausgebildet ist, aufweist,
wobei das Herstellungsverfahren die Schritte umfaßt:
Verwendung von mehreren der Brennschablonen (10) durch Aufstapeln selbiger in mehreren Schritten und
Anordnen eines plattenförmigen Deckels auf der obersten Brennschablone der aufgestapelten Brennschablonen.

2. Herstellungsverfahren eines porösen keramischen Körpers nach Anspruch 1,
wobei
die Durchgangsöffnung (11,12) und/oder der ausgeschnittene Teil in der Bodenseite der Brennschablone (10) ausgebildet ist/sind und
die Fläche des Teils der Bodenseite der Brennschablone (10), in welchem die Durchgangsöffnung und/oder der ausgeschnittene Teil ausgebildet ist/sind, 0,5 bis 60% der Fläche der Bodenseite einnimmt.

3. Herstellungsverfahren für einen porösen keramischen Körper nach Anspruch 1 oder 2,
wobei
die Brennschablone (10) einen Kohlenstoffpulverhaltebereich (13) an ihrer Bodenseite aufweist.

## Revendications

1. Procédé de fabrication d'un corps céramique poreux,
dans lequel, après avoir dégraissé un corps façonné en céramique en forme de colonne contenant de la poudre céramique et un liant et présentant un certain nombre de trous traversants placés parallèlement les uns aux autres dans la direction longitudinale avec une cloison intercalée entre celles-ci, on place ledit corps façonné en céramique en forme de colonne dans un support (10) de cuisson et on le cuit,
dans lequel
ledit support (10) de cuisson présente un trou traversant (11, 12) et/ou une partie découpée formée dans une partie de celui-ci,
ledit procédé de fabrication comprenant les étapes consistant à :
utiliser plusieurs desdits supports (10) de cuisson en les empilant dans de multiples étages, et
placer un couvercle en forme de plaque sur le support de cuisson le plus supérieur parmi les supports de cuisson empilés.

2. Procédé de fabrication d'un corps céramique poreux selon la revendication 1,
dans lequel
ledit trou traversant (11, 12) et/ou la partie découpée est/sont formés dans la face inférieure du support (10) de cuisson, et
la superficie de la partie sur la face inférieure dudit support (10) de cuisson dans laquelle ledit trou traversant et/ou ladite partie est/sont formés occupe 0,5 à 60% de la superficie de ladite face inférieure.

3. Procédé de fabrication pour un corps céramique poreux, selon la revendication 1 ou 2,
dans lequel
ledit support (10) de cuisson présente une zone de retenue de poudre de carbone (13) dans sa face inférieure.
